# EUROPEAN PATENT APPLICATION

(11) **EP 2 116 433 A1**
(43) Date of publication of application: **11.11.2009**
(21) Application number: 08155794.4
(22) Date of filing: 07.05.2008
(51) Int. Cl.: B60S 1/50, B60K 15/04

(54) **Method for filing a reservoir**

(71) Applicant: Inergy Automotive Systems Research (SA), 1120 Bruxelles (BE)
(72) Inventor: Hill, David, Commerce Township, MI 48382 (US); Thompson, James Edward, Novi, MI 48375 (US); Upton, Damon, Ray, MI 48096 (US); Sarquis, Russell, Troy, MI 48083 (US)
(74) Representative: Jacques, Philippe

(57) **Abstract**

Method for filling a reservoir intended to contain a fluid on board a motor vehicle and using a filling nozzle for the said fluid, whereby
• the reservoir is equipped with a filling pipe (4), comprising a first end to receive the nozzle and a second end to connect to the reservoir,
• the first end of the filling pipe (4) is furnished with an extension device (8) whose design is such that it allows the fluid to flow from the nozzle into the filling pipe (4), said extension device (8) comprising a first end equipped with a filling interface to receive the nozzle and a second end to connect in a sealed manner to the first end of the filling pipe (4),
• the nozzle is connected in a sealed manner to the first end of the extension device (8) so that the fluid can flow from the nozzle into the filling pipe (4).

## Description

The invention relates to the filling of reservoirs on board motor vehicles.

In general motor vehicles (cars, light utility vehicles, motorcycles, lorries, etc.) are fitted with reservoirs intended to contain fluids of diverse and varied kinds. So it is possible to list reservoirs containing any type of product that can be used for cleaning (screen-wash liquid), lubrication (engine oil), braking and/or suspension (hydraulic oil), cooling (coolant liquid), depolluting (additive for regenerating the particle filter, urea, ...).

For all these fluids whose service life is often longer than the normal refueling of the vehicles, it is necessary to top up the levels or, at the extreme, to refill the whole onboard reserve.

The filling operation is not easy and must take account for these fluids of requirements relating to factory filling, with extremely tight operating times in terms of flows, pressure and time. The fluids may be incorporated into the vehicle in the course of maintenance throughout its life or for example at the moment of a refueling by an average user and this is done with filling requirements other than those that exist during the assembly of this vehicle on a production line.

Furthermore, the space available on any vehicle is often limited and makes it necessary to arrange interfaces specific to each type of reservoir with the intention to avoid altering the body design of the vehicle.

Different approaches to this problem have been pursued. Known solutions involve a filling interface that either disrupts the vehicle body design or is not accessible without special tools, and more suited for someone skilled in the art than for the average user.

The idea of the present invention is to provide a solution to this problem, that could be used in any case in which a liquid reservoir is difficult to insert a commercial filling nozzle into, such as those used for the dispensing of urea for Selective Catalytic Reduction (SCR). In such cases a filling interface as convenient as those used for refueling is not necessary, and the benefits of an aesthetic design outweigh the such needs. Nevertheless, there must be a refilling interface that can be accessed by the average user and meet interface requirements (eg. ISO/FDIS 22241-4) without the need for special tools.

Accordingly, the present invention concerns a method for filling a reservoir intended to contain a fluid on board a motor vehicle and using a filling nozzle for the said fluid, whereby
- the reservoir is equipped with a filling pipe, comprising a first end to receive the nozzle and a second end to connect to the reservoir,
- the first end of the filling pipe is furnished with an extension device whose design is such that it allows the fluid to flow from the nozzle into the filling pipe, said extension device comprising a first end equipped with a filling interface to receive the nozzle and a second end to connect in a sealed manner to the first end of the filling pipe,
- the nozzle is connected in a sealed manner to the first end of the extension device so that the fluid can flow from the nozzle into the filling pipe.

A reservoir intended to contain a fluid means a reservoir capable of storing and delivering a liquid fluid in a system on board a motor vehicle. Motor vehicle means cars, lorries and motorcycles.

The reservoir is an enclosed chamber. An enclosed chamber means a hollow body, of various shapes, usually sealed from the outside, which may be fitted with various internal or external accessories or else accessories passing through the wall of the chamber, such as valves, pipettes, liquid-vapour separators and degassing vessels.

The reservoir may be made of any material compatible with the fluid that it is likely to contain. It may for example be a plastic or a metal. The reservoir is preferably made of plastic. Plastic means any material comprising at least a polymer made of synthetic resin.

All the types of plastic may be suitable. Plastics that are well suited belong to the category of thermoplastics.

Thermoplastic means any thermoplastic polymer, including thermoplastic elastomers, and their blends. The term "polymer" means both homopolymers and copolymers (particularly binary or ternary). Examples of such copolymers are, in a non-limiting manner, random distribution copolymers, sequenced copolymers, block copolymers and graft copolymers.

Any type of thermoplastic copolymer or polymer whose melting temperature is below the decomposition temperature is suitable. The synthetic thermoplastics that have a melting range extending over at least 10 degrees Celsius are particularly suitable. As an example of such materials, there are those that have a polydispersion of their molecular mass.

In particular, polyolefins, vinyl polyhalides, thermoplastic polyesters, polyketones, polyamides and their copolymers may be used. A blend of polymers or copolymers may also be used, as can a blend of polymeric materials with inorganic, organic and/or natural fillers, such as, for example, but not limitingly, carbon, salts and other inorganic derivatives, natural fibres, glass fibres and polymeric fibres. It is also possible to use multi-layer structures consisting of stacked and fixedly attached layers comprising at least one of the polymers or copolymers described hereinabove.

The vinyl polyhalides and polyolefins are usually preferred. A polymer that is often used is polyethylene. Excellent results have been obtained with high-density polyethylene (HDPE).

According to the invention, the reservoir is equipped with a filling pipe, comprising a first end with an opening to receive the nozzle and a second end to connect to the reservoir. The first end of the filling pipe is furnished with an extension device whose design is such that it allows the fluid to flow from the nozzle into the filling pipe, said extension device comprising a first end with an opening to receive the nozzle and a second end to connect in a sealed manner to the first end of the filling pipe. The extension device allows to fill in the reservoir in cases where the first end of the filling pipe is situated in a remote and inconspicuous location on a car body and where it is not easy for a user to insert the nozzle in the opening at the first end of the filling pipe. Examples of such locations include remote areas of a vehicle's trunk, an engine compartment or a vehicle underbody. With the method according to the invention, the location where to allow the fluid to flow from the nozzle into the filling pipe is more accessible to the user.

In the context of the invention, the extension device has a geometry that is adapted so as to take account of the location of the first end of the filling pipe on a car body.

According to the invention, the nozzle is connected in a sealed manner to the first end of the extension device so that the fluid can flow from the nozzle into the filling pipe. In the context of the invention, "in a sealed manner" means "in a leaktight manner" that is to say that no fluid leakage is allowed at the interface between the nozzle and the extension device.

Preferably the filling pipe is equipped with a means of sealing that is generally located within the filling pipe. Examples of means of sealing are an interference fit or a radial elastomer seal on an inner diameter of the filling pipe.

According to a first embodiment of the invention, the extension device comprises an extension pipe comprising a first end and a second end, said second end comprising a connection means, the first end of the filling pipe comprising also a connection means, and the method comprises at least one step where both connections means are linked to cooperate. In other words, the first end of the filling pipe comprises a connection means intended to cooperate with the connection means of the extension pipe.

An example that has given good results is a male thread on the filling pipe that may cooperate with a threaded collar on the extension pipe.

Preferably the threaded collar may spin about the axis of the extension pipe so that the threaded collar may be screwed on the male thread of the filling pipe and the extension pipe does not undergo a movement associated to the screwing movement of the threaded collar on the male thread.

Advantageously the extension pipe is stored in the filling pipe when the opening at the first end of the filling pipe is closed, and is extended from the filling pipe so as to receive the nozzle for a filling of the reservoir. The extension pipe is also preferably made of a flexible material so that the extension pipe can easily be inserted within the filling pipe and fit to the shape of said filling pipe.

The fluid that the reservoir is intended to contain may be used for cleaning, lubrication, braking, suspension, cooling or depolluting in particular.

Preferably the invention is used in the context of depolluting the exhaust gases of motor vehicles. In this case, the fluid may for example be an additive used for regenerating a particle filter or may be injected into the exhaust gases of an internal combustion engine.

The additive concerned is preferably a reducing agent capable of reducing the NOx present in the exhaust gases. In this context, the additive is a composition, as a solution in a hydrocarbon solvent, of a low-temperature combustion catalyst of solid carbon particles produced by the incomplete combustion of a heavy hydrocarbon in a spontaneous ignition engine. Heavy hydrocarbon means a liquid fuel or a fuel of thick consistency at ordinary temperature whose molecules comprise more than 9 carbon atoms. An example of such a heavy hydrocarbon is a petroleum blend called gasoil that can be used in diesel type engines.

Examples of suitable liquid additives are iron and cerium salts in a hydrocarbon solution.

Also preferably the additive concerned is urea. Specifically, with strict standards coming into force on the exhaust emissions for certain types of motor vehicles (for example lorries), devices for cleansing the nitrogen oxides (NOx) must be installed. A solution for reducing the NOx emissions to the required value consists in producing a selective catalytic reaction with urea. To do this, the vehicles must be fitted with a reservoir containing a urea solution, and a device for metering the quantity of urea to be injected into the exhaust line of the motor vehicles.

The invention also relates to a reservoir which is filled by a method of the type described hereinabove and which is mounted on a motor vehicle.

According to the invention the reservoir is equipped with a filling pipe, comprising a first end to receive the nozzle and a second end to connect to the reservoir, the said first end of the filling pipe is furnished with an extension device whose design is such that it allows the fluid to flow from the nozzle into the filling pipe, said extension device comprising a first end to receive the nozzle and a second end to connect to the first end of the filling pipe.

Also in this context, the reservoir is a reservoir intended to contain the said additive.

The reservoir according to the invention may be placed in any part of the vehicle, for example in or on the main fuel reservoir, or in the rear of the vehicle.

In particular, the reservoir also comprises a safety device preventing an access to the filling pipe.

The above described concept is illustrated in a non limitative way by Figures 1 to 4, wherein :
- Figure 1 represents 2 side views (a) and (b) of a filling pipe according to a first embodiment of the invention;
- Figure 2 represents 2 side views (a) and (b) of a filling pipe according to a second embodiment of the invention;
- Figure 3 is a view of a filling pipe opening located in a wheel well;
- Figure 4 is a view of a filling pipe opening mounted behind a license plate of a vehicle.

In these figures, identical numbers designate similar or identical parts.

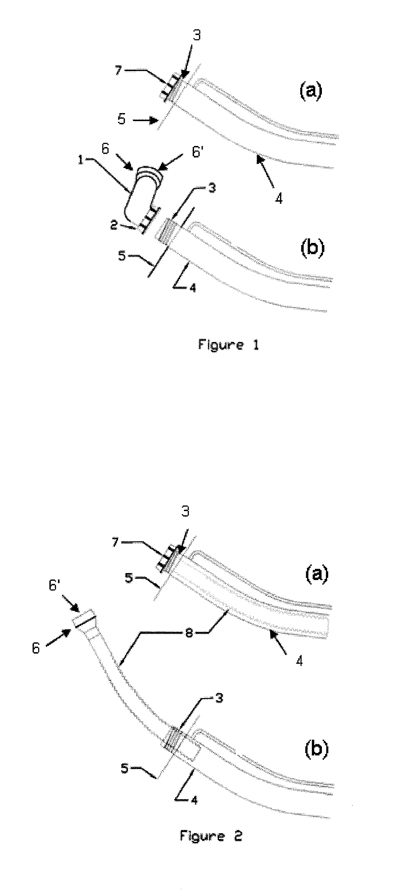

Figure 1 (a) illustrates a filling pipe (4) comprising a first end (4') to receive a nozzle, said first end (4') being sealed by a cap (7) and a second end connected to a liquid reservoir (not pictured). The first end (4') of the filling pipe (4) is attached to a vehicule chassis (5) and comprises a male thread (3) intended to cooperate with a female thread (not pictured) on the cap (7) so that the cap (7) seals off the first end (4') of the filling pipe (4). In Figure 1 (b) the cap (7) has been removed so that the reservoir can be filled with liquid dispensed by the nozzle. In order to fill in the reservoir from a location more accessible to the nozzle, an extension pipe (1) is used, the extension pipe (1) comprising a first end (6') to receive the nozzle and a second end (2') to connect to the first end (4') of the filling pipe (4). The second end (2') comprises a collar thread (2). The connection between the filling pipe (4) and the extension pipe (1) is secured using an elastomer seal (not pictured) constrained by the male thread (3) and the threaded collar (2) that is able to spin about the axis of the extension pipe (1).

Figure 2 (a) illustrates another embodiment of the invention, in which a corrugated tube (8) is stored within a filling pipe (4) and is sealed from the atmosphere via a threaded cap (7). The filling pipe (4) also comprises a first end (4') to receive a nozzle and a second end (not pictured) connected to a liquid reservoir. The cap (7) mates with a male thread (3) at the first end (4') of the filling pipe (4). The corrugated tube (8) comprises a first end equipped with an interface (6) suitable for the refilling of the liquid reservoir via a commercial nozzle or a bottle spout. In the event that refilling of the liquid reservoir is required (as illustrated in Figure 2 (b)), the corrugated tube (8) is extended from the filling pipe (4) which is only accessible by hand's reach, to create a means for filling the liquid reservoir. The first end (4') of the filling pipe (4) is equipped with a means of sealing within the filling pipe (4), via an interference fit, or use of a radial elastomer seal (not pictured) on the inner diameter of the filling pipe (4). This radial seal also serves as a wiper to the outer diameter of the corrugated tube (8) of the liquid stored in the reservoir.

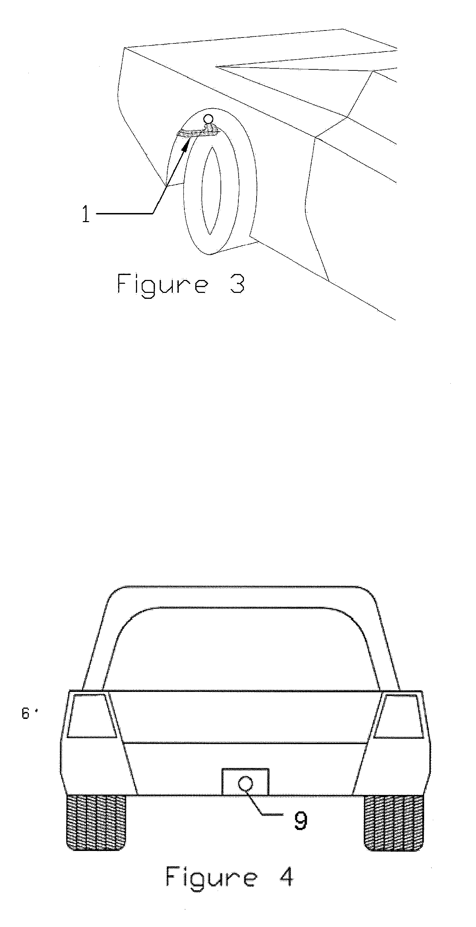

Figure 3 shows one instance where the filling pipe opening pictured in Figure 1 and 2, is located in a wheel well of a vehicle. The extension pipe (1) is depicted to show how it allows refilling of the liquid reservoir from outside the wheel well. The embodiment in Figure 2 could also be used in this application.

Figure 4 shows another instance, in which the filling pipe opening is mounted behind a license plate (9) of a vehicle. In this instance the filling pipe opening is too low for an ergonomic refilling of the liquid reservoir.

Other locations could include, remote areas of the vehicle's trunk, the engine compartment, and the vehicle underbody.

## Claims

1. - Method for filling a reservoir intended to contain a fluid on board a motor vehicle and using a filling nozzle for the said fluid, whereby
• the reservoir is equipped with a filling pipe, comprising a first end to receive the nozzle and a second end to connect to the reservoir,
• the first end of the filling pipe is furnished with an extension device whose design is such that it allows the fluid to flow from the nozzle into the filling pipe, said extension device comprising a first end equipped with a filling interface to receive the nozzle and a second end to connect in a sealed manner to the first end of the filling pipe,
• the nozzle is connected in a sealed manner to the first end of the extension device so that the fluid can flow from the nozzle into the filling pipe.

2. - Method according to Claim 1, **characterized in that** the extension device comprises an extension pipe comprising a first end and a second end, said second end comprising a connection means, **in that** the first end of the filling pipe comprises a connection means, and **in that** the method comprises at least one step where both connection means are linked to cooperate.

3. - Method according to any one of the preceding claims, **characterized in that** the extension pipe is stored in the filling pipe when the opening at the first end of the filling pipe is closed, and **in that** the extension pipe is extended from the filling pipe so as to receive the nozzle for filling the reservoir.

4. - Method according to any one of the preceding claims, **characterized in that** the fluid may be used for cleaning, lubrication, braking, suspension, cooling or depolluting.

5. - Method according to Claim 4, **characterized in that** the fluid is an additive used for the regeneration of a particle filter.

6. - Method according to Claim 4, **characterized in that** the fluid is urea.

7. - Reservoir which is filled by a method according to any one of the preceding claims and which is equipped with a filling pipe, comprising a first end to receive the nozzle and a second end to connect to the reservoir, the said first end of the filling pipe is furnished with an extension device whose design is such that it allows the fluid to flow from the nozzle into the filling pipe, said extension device comprising a first end to receive the nozzle and a second end to connect to the first end of the filling pipe.

8. - Reservoir according to Claim 7, **characterized in that** it also comprises a safety device preventing an access to the filling pipe.
